# EUROPEAN PATENT APPLICATION

(11) **EP 4 410 580 A1**
(43) Date of publication of application: **07.08.2024**
(21) Application number: 22874898.4
(22) Date of filing: 27.09.2022
(51) Int. Cl.: B60K 6/44, B60K 6/36, B60K 6/547, F16H 3/097

(54) **POWER TRANSMISSION SYSTEM AND VEHICLE**

(30) Priority: 30.09.2021 CN 202111165002
(71) Applicant: If You Technology Co., Ltd., Baoding, Hebei 071000 (CN)
(72) Inventor: TANG, Ziwei, Baoding, Hebei 071000 (CN); TANG, Haifeng, Baoding, Hebei 071000 (CN); JIA, Junfeng, Baoding, Hebei 071000 (CN); PENG, Zhengzhou, Baoding, Hebei 071000 (CN); DONG, Lijie, Baoding, Hebei 071000 (CN)
(74) Representative: Rondano, Davide
(86) International application number: PCT/CN2022/121670
(87) International publication number: WO 2023/051513

(57) **Abstract**

The present application discloses a force transmission system and a vehicle. The force transmission system includes: an engine, a first motor generator and a second motor generator; a first input shaft which is in force transmission connection with the engine and the first motor generator, respectively; a second input shaft which is in force transmission connection with the second motor generator; a first transfer mechanism selectively engaged with the first input shaft and linked with the second input shaft; a second transfer mechanism linked with the first input shaft; an intermediate shaft linked with the first transfer mechanism and selectively linked with the first input shaft; an output shaft selectively linked with the intermediate shaft and/or the second transfer mechanism and/or the first input shaft. The first input shaft and the output shaft are coaxially arranged, the second transfer mechanism and the intermediate shaft are arranged to be spaced from each other in a circumferential direction of the first input shaft. The force transmission system realizes respective gear shifting without power interruption under various operation conditions by virtue of four different transmission paths. The force transmission system has a compact structure, a reasonable layout, and a low cost.

## Description

This application claims priority to Chinese Patent Application No. 202111165002.2 filed with CNIPA on September 30, 2021, and entitled "force transmission system and vehicle".

### TECHNICAL FIELD

The present application relates to the technical field of force transmission of vehicles, and in particular, to a force transmission system, and a vehicle.

### BACKGROUND

In the related art, with the development of gasoline-electric hybrid technology, the fields in which the gasoline-electric hybrid technologies can be applied are gradually increased. Although the gasoline-electric hybrid technologies applied to sedan cars are mature, a sedan car has a light load, gears of a force transmission system of a sedan car cannot be applicable to heavy-duty vehicles, and particularly to a hybrid force transmission system applied to commercial vehicles, a condition of power interruption may occur in the heavy-duty vehicle, and an occurrence of power interruption in the heavy-duty vehicle may affect a driving performance and driving safety of the vehicle seriously. Thus, under the background of gasoline-electric hybrid technologies, how to develop a force transmission system that can be applicable to heavy-duty vehicles and overcomes power interruption in gear shifting process simultaneously has become a technical problem in this field.

### SUMMARY

### TECHNICAL PROBLEM

One of the objects of the embodiments of the present application is to provide a force transmission system and a vehicle.

### SOLUTIONS FOR SOLVING THE PROBLEM

### TECHNICAL SOLUTIONS

The technical solutions adopted in the embodiments of the present application are set forth below:
In the first aspect, a force transmission system is provided. The force transmission system includes:
an engine, a first motor generator and a second motor generator;
a first input shaft being in force transmission connection with the engine and the first motor generator;
a second input shaft being in force transmission connection with the second motor generator;
a first transfer mechanism being selectively engaged with the first input shaft and being linked with the second input shaft;
a second transfer mechanism being linked with the first input shaft;
an intermediate shaft being linked with the first transfer mechanism and being selectively linked with the first input shaft;
an output shaft being selectively linked with the intermediate shaft and/or the second transfer mechanism and/or the first input shaft, respectively; where the first input shaft and the output shaft are coaxially arranged, the second transfer mechanism and the intermediate shaft are arranged to be spaced from each other in a circumferential direction of the first input shaft.

In one embodiment, the first transfer mechanism is configured as a first double-linked gear sleeved on a periphery of the first input shaft; where the second input shaft is provided with a second input shaft gear, and the first double-linked gear is provided with a first double-linked input gear meshing with the second input shaft gear;
the intermediate shaft is provided with an intermediate-shaft-first-input-gear, and the first double-linked gear is provided with a first double-linked output gear meshing with the intermediate-shaft-first-input-gear.

In one embodiment, the second transfer mechanism is configured as one or a plurality of second transfer shaft(s), each of the second transfer shafts is provided with a second transfer input gear and a second transfer output gear, where the second transfer shaft is arranged to be in parallel with and offset from the intermediate shaft in a circumferential direction of the first input shaft, and the first input shaft is provided with a first-input-shaft-first-output-gear meshing with the second transfer input gear;
the output shaft is provided with an output-shaft-first-input-gear selectively linked with the output shaft, and the output-shaft-first-input-gear is meshed with the second transfer output gear.

In one embodiment, the first input shaft is sleeved with a first-input-shaft-second-output-gear, the intermediate shaft is provided with an intermediate-shaft-second-input-gear meshing with the first-input-shaft-second-output-gear.

In one embodiment, the force transmission system further includes:
a first gear shifting device which is disposed on the first input shaft and selectively enables the first input shaft to be engaged with the first double-linked gear or the first-input-shaft-second-output-gear.

In one embodiment, the output shaft is provided with a second gear shifting device that selectively enables the output shaft to be engaged with the first input shaft or enables an output-shaft-first-input-gear to be engaged with the output shaft.

In one embodiment, the intermediate shaft is provided with a plurality of intermediate-shaft-output-gears, the output shaft is sleeved with a plurality of output-shaft-second-input-gears meshing with the plurality of intermediate-shaft-output-gears respectively, and the output shaft is selectively engaged with one of the plurality of output-shaft-second-input-gears.

In one embodiment, the force transmission system further includes:
a third gear shifting device which is disposed on the output shaft and selectively enable one of the plurality of output-shaft-second-input-gears to be engaged with the output shaft.

In one embodiment, one or a plurality of intermediate shafts is/are configured, each of the intermediate shafts is linked with the first transfer mechanism, and each of the intermediate shafts is provided with a plurality of the intermediate-shaft-output-gears.

In one embodiment, a clutch is disposed between an engine output shaft of the engine and the first input shaft, and the clutch is configured to selectively enable the engine output shaft to be engaged with the first input shaft.

In the second aspect, a vehicle is provided, the vehicle includes any force transmission system in the first aspect.

### BENEFICIAL EFFECTS OF THE INVENTION

### BENEFICIAL EFFECTS

In accordance with the force transmission system of the present application, according to the arrangement of the first transfer mechanism, the second transfer mechanism and the intermediate shaft, hybrid linkage of the three power sources under a plurality of different operating conditions can be realized. Four force transmission paths are constructed in the force transmission system. During the gear shifting process of the force transmission system, by switching between the four force transmission paths, power interruption does not occur in the force transmission system during the gear shifting process, the smoothness of the force transmission system is improved by utilizing the transmission system having simple structure, the cost of the force transmission system is reduced, and a setback feeling in the driving process is reduced.

The beneficial effects of the second aspect provided in this embodiment of the present application are the same as the beneficial effects of the first aspect. Regarding the beneficial effects of the second aspect, reference can be made to the beneficial effects of the first aspect.

### BRIEF DESCRIPTION OF DRAWINGS

### DESCRIPTION OF DRAWINGS

In order to describe the technical solutions in the embodiments of the present application or in the existing technologies more clearly, a brief introduction regarding the accompanying drawings that need to be used for describing the embodiments or demonstration technologies is given below. It should be understood that, the following accompanying drawings are only some embodiments of the present application. For the person of ordinary skill in the art, other drawings may also be obtained according to these drawings without paying creative effort.
FIG. 1 illustrates a schematic structural diagram of a force transmission system according to one embodiment of the present application;
FIG. 2 illustrates a schematic structural diagram of a force transmission system with a sub-transmission according to one embodiment of the present application;
FIG. 3 illustrates a schematic structural diagram of a force transmission system with one single intermediate shaft according to one embodiment of the present application;
FIG. 4 illustrates a schematic structural diagram of a force transmission system with one single intermediate shaft and a sub-transmission according to one embodiment of the present application;
FIG. 5 illustrates a schematic structural diagram of the force transmission system with one single intermediate shaft according to another embodiment of the present application;
FIG. 6 illustrates a schematic structural diagram of the force transmission system with one single intermediate shaft and a sub-transmission according to another embodiment of the present application.

Reference numerals are listed below:
engine 1; engine output shaft 70; first motor generator 2; second motor generator 3; clutch 4;
first input shaft 10; first-input-shaft-first-output-gear 11; first-input-shaft-second-output-gear 12;
second input shaft 20; second input shaft gear 21;
intermediate shaft 30; intermediate-shaft-first-input-gear 31; first-intermediate-shaft-output-gear 32a; second-intermediate-shaft-output-gear 32b; intermediate-shaft-second-input-gear 33;
output shaft 40; output-shaft-first-input-gear 41; first-output-shaft-second-input-gear 42a; second-output-shaft-second-input-gear 42b;
second transfer shaft 10a; second transfer input gear 10b; second transfer output gear 10c;
first double-linked gear 20a; first double-linked input gear 20b; first double-linked output gear 20c;
first gear shifting device k1; second gear shifting device k2; third gear shifting device k3;
third input shaft 40a; third-input-shaft-output-gear 61; sub-transmission gear shifting mechanism k4;
sub-transmission intermediate shaft 50; sub-transmi ssion-intermediate-shaft-input-gear 50a; sub-transmission-intermediate-shaft-output-gear 50b;
sub-transmission output shaft 60; sub-transmission-output-shaft-input-gear 62.

### EMBODIMENTS OF THE INVENTION

### EMBODIMENTS OF THE PRESENT INVENTION

In order to make the objective, the technical solutions and the advantages of the present application be clearer and more understandable, the present application will be further described in detail below with reference to accompanying figures and embodiments. It should be understood that the embodiments described in detail herein are merely intended to illustrate but not to limit the present application.

It should be noted that the various steps recited in the embodiments of the present application can be executed in different orders and/or in parallel. In addition, the method embodiments may include additional steps and/or execution of the steps shown can be omitted. The scope of the present application is not restricted in this regard. The term "including" and variations thereof used in the present application are non-exclusive including, that is, "including but not limited to". The term "based on" means "at least partially based on". The term "one embodiment" means "at least one embodiment". The term "another embodiment" means "at least one other embodiment". The term "some embodiments" means "at least some embodiments". Relevant definitions of other terms will be provided hereinafter. It should be noted that, concepts including "first" and "second" mentioned in the present application are only used to distinguish different devices, modules or units, rather than limiting an order or an interdependence of the functions implemented by these devices, modules or units.

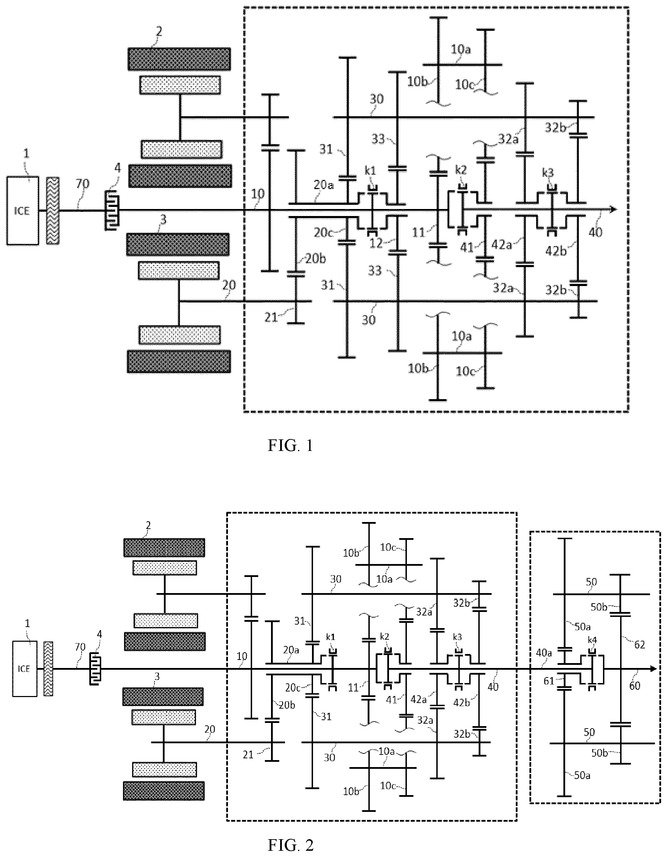

A force transmission system according to the embodiments of the present application is described below with reference to FIGS. 1-6. The force transmission system includes an engine 1, a first motor generator 2 and a second motor generator 3. A first input shaft 10 is in force transmission connection with the engine 1 and the first motor generator 2 respectively, and a second input shaft 20 is in force transmission connection with the second motor generator 3. The first transfer mechanism is selectively engaged with the first input shaft 10 and is linked with the second input shaft 20, the second transfer mechanism is linked with the first input shaft 10. The intermediate shaft 30 is linked with the first transfer mechanism and is selectively linked with the first input shaft 10, and the output shaft 40 may be selectively linked with the intermediate shaft 30 and/or the second transfer mechanism and/or the first input shaft 10, respectively. The first input shaft 10 and the output shaft 40 are coaxially arranged, the second transfer mechanism and the intermediate shaft 30 are arranged to be spaced from each other in a circumferential direction of the first input shaft 10.

In the related art, with the development of gasoline-electric hybrid technology, the fields in which the gasoline-electric hybrid technologies can be applied are gradually increased. Although the gasoline-electric hybrid technologies applied to sedan cars are mature, a sedan car has a light load, gears of the transmission system of the sedan car cannot be applicable to a heavy-duty vehicle, and particularly to a hybrid force transmission system applied to commercial vehicles, a condition of power interruption occurs in the heavy-duty vehicle, and an occurrence of power interruption in the heavy-duty vehicle may seriously affect a driving performance and driving safety of the vehicle. Thus, under the background of gasoline-electric hybrid technologies, how to develop a force transmission system that can be applicable to heavy-duty vehicles and overcomes power interruption in gear shifting process simultaneously has become a technical problem in this field.

In the present application, four transmission paths are provided in the force transmission system.

First transmission path is set forth below: the engine 1 and/or the first motor generator 2 and/or the second motor generator 3 are used as power sources, the first input shaft 10 is linked with the second transfer mechanism, and the output shaft 40 is selected to be linked with the second transfer mechanism, such that the driving force from the engine 1 and/or the first motor generator 2 and/or the second motor generator 3 may be output through the first input shaft 10, the second transfer mechanism and the output shaft 40.

Second transmission path is as follows: the engine 1 and/or the first motor generator 2 and/or the second motor generator 3 are used as power sources, the first input shaft 10 is selected to be connected to a first double-linked gear 20a, the second input shaft 20 is linked with the first transfer mechanism and the first input shaft 10, the first transfer mechanism is linked with the intermediate shaft 30, and the output shaft 40 is selected to be linked with the intermediate shaft 30 to output driving force.

Third transmission path is set forth below: the engine 1 and/or the first motor generator 2 is/are used as power source(s), the first input shaft 20 is selected to be connected with a first-input-shaft-second-output-gear 12, the first input shaft 10 is linked with the intermediate shaft 30, and the output shaft 40 is selected to be linked with the intermediate shaft 30 to output driving force.

Fourth transmission path is set forth below: the engine 1 and/or the first motor generator 2 and/or the second motor generator 3 are used as power sources, and the output shaft 40 is directly selected to be linked with the first input shaft 10 to output driving force.

In the aforementioned four force transmission paths, each transmission path may correspond to a plurality of gears. For example, the first transmission path corresponds to a third gear of the force transmission system, while the second transmission path corresponds a first gear and a fourth gear of the force transmission system, the third transmission path corresponds to the second gear and the fifth gear of the force transmission system, and the fourth transmission path corresponds to the sixth gear of the force transmission system. Due to different force transmission paths and different power sources, when shifting between two adjacent gears, different force transmission paths will not interfere with each other. When gear shifting is performed, due to the fact that the transmission paths of two types of driving forces do not interfere with each other, power interruption during gear shifting is avoided, comfort is improved, and a setback feeling in the driving process is reduced.

According to the force transmission system of the present application, in the control of gear shifting of the engine 1 and/or the first motor generator 2, the second motor generator 3 can be kept in the second transmission path to transmit driving force, driving force is transmitted to the output shaft 40 through the second input shaft 20, the first transfer mechanism and the intermediate shaft 30, driving force output of the second motor generator 3 in the first gear or the fourth gear is maintained. However, the driving force from the engine 1 and/or the first motor generator 2 may be transmitted without power interruption among the four transmission paths. Thus, gear shifting between different gears and without power interruption is realized accordingly.

In accordance with the force transmission system of the present application, according to the arrangement of the first transfer mechanism, the second transfer mechanism and the intermediate shaft, hybrid linkage of the three power sources under a plurality of different operating conditions may be realized. Four force transmission paths are constructed in the force transmission system, during the gear shifting process of the force transmission system, power interruption does not occur in the force transmission system during the gear shifting process by switching between the four force transmission paths, the smoothness of the force transmission system is improved by utilizing the force transmission system having simple structure, the cost of the force transmission system is reduced, and a setback feeling in the driving process is reduced.

According to one embodiment of the present application, as shown in FIGS. 1-4, the first transfer mechanism is configured as a first double-linked gear 20a sleeved on a periphery of the first input shaft 10, where the second input shaft 20 is provided with a second input shaft gear 21, the first double-linked gear 20a is provided with a first double-linked input gear 20b engaged with the second input shaft gear 21. The intermediate shaft 30 is provided with an intermediate-shaft-first-input-gear 31, and the first double-linked gear 20a is provided with a first double-linked output gear 20c engaged with the intermediate-shaft-first-input-gear 31. The first transfer mechanism is configured as a first double-linked gear 20a, and the first double-linked input gear 20b and the first double-linked output gear 20c are arranged, such that the second input shaft 20 can be linked with the intermediate shaft 30. The first double-linked gear 20a is arranged to be sleeved on the first input shaft 10, such that mutual interference between the first double-linked gear 20a and the first input shaft 10 can be avoided, space occupation of the force transmission system is small, the arrangement of the force transmission system is more reasonable, and the volume of the force transmission system is reduced.

According to one embodiment of the present application, as shown in FIGS. 1-2, the second transfer mechanism is configured as one or more second transfer shaft(s) 10a, each second transfer shaft 10a is provided with a second transfer input gear 10b and a second transfer output gear 10c, the second transfer shaft 10a is arranged to be in parallel with and offset from the intermediate shaft 30 in an axial direction of the first input shaft 10. The first input shaft 10 is provided with a first-input-shaft-first-output-gear 11, the second transfer input gear 10b is engaged with the first-input-shaft-first-output-gear 11, the output shaft 40 is provided with an output-shaft-first-input-gear 41 selectively linked with the output shaft 40, and the output-shaft-first-input-gear 41 is meshed with the second transfer output gear 10c.

The second transfer mechanism is configured as the second transfer shaft 10a, and is provided with the second transfer input gear 10b and the second transfer output gear 10c, such that the driving force from the first input shaft 10 can be transmitted to the output shaft 40. The output-shaft-first-input-gear 41 is selectively engaged with the output shaft 40 to realize an engagement control of the first transmission path. The second transfer shaft 10a is arranged to be parallel with and offset from the intermediate shaft 30, such that mutual interference between the second transfer shaft 10a and the intermediate shaft 30 can be avoided, a complex sleeve shaft structure is avoided, the arrangement of the force transmission system is more reasonable, the reliability of the force transmission system is improved, and manufacturing and maintenance costs are reduced. According to one embodiment of the present application, as shown in FIGS. 1-6, the first input shaft 10 is sleeved with a first-input-shaft-second-output-gear 12, and the intermediate shaft 30 is further provided with an intermediate-shaft-second-input-gear 33 engaged with the first-input-shaft-second-output-gear 12, the first-input-shaft-second-output-gear 12 may transmit driving force to the intermediate shaft 30 to implement driving force transmission in the third driving force transmission path.

The force transmission system according to the present application is further provided with a first gear shifting device k1, and the first gear shifting device k1 is arranged on the first input shaft 10 to selectively enable the first input shaft 10 to be engaged with the first double-linked gear 20a or with the first-input-shaft-second-output-gear 12. When the first input shaft 10 is engaged with the first double-linked gear 20a, the second transmission path of the force transmission system may be maintained, that is, driving force transmission of the force transmission system in the first gear and the fourth gear is realized, dynamic coupling between the first input shaft 10 and the second input shaft 20 may also be realized. When the first input shaft 10 is engaged with the first-input-shaft-second-output-gear 12, the third driving force transmission path of the force transmission system may be maintained, that is, driving force transmission of the force transmission system in the second gear and the fifth gear is realized.

According to one embodiment of the present application, as shown in FIGS. 1-4, the output shaft 40 is provided with a second gear shifting device k2, and the second gear shifting device k2 selectively enables the output shaft 40 to be engaged with the first input shaft 10 or enables the output-shaft-first-input-gear 41 to be engaged with the output shaft 40. When the second gear shifting device k2 enables the output shaft 40 to be engaged with the first input shaft 10, either the engine 1 or the first motor generator 2 can be independently and directly driven in the sixth gear position, or alternatively, the engine 1 is linked in parallel with the first motor generator 2, or alternatively, the engine 1 and the second motor generator 2 provide forward gear driving in parallel linkage manner in the fourth gear or in the sixth gear. The second gear shifting device k2 enables the output-shaft-first-input-gear 41 to be engaged with the output shaft 40 to realize the first transmission path, thereby realizing gear transmission of three gears of the force transmission system. The engine 1 can be independently and directly driven in the third gear or be in parallel linkage with the first motor generator 2. Or alternatively, the second motor generator 3 provides forward gear driving in the parallel linkage manner in the first gear, the third gear or the fourth gear.

According to one embodiment of the present application, as shown in FIGS. 1-6, the intermediate shaft 30 is provided with a plurality of intermediate-shaft-output-gears which may be the first-intermediate-shaft-output-gear 32a and the second-intermediate-shaft-output-gear 32b. The output shaft 40 is sleeved with a plurality of output-shaft-second-input-gears respectively meshing with the plurality of intermediate-shaft-output-gears, that is, a first-output-shaft-second-input-gear 42a and a second-output-shaft-second-input-gear 42b. The output shaft 40 may be selectively engaged with one of the first-output-shaft-second-input-gear 42a and the second-output-shaft-second-input-gear 42b.

A plurality of intermediate-shaft-output-gears are disposed on the intermediate shaft 30, and a plurality of output-shaft-second-input-gears are disposed on the output shaft 40. Thus, a transmission ratio between the intermediate shaft 30 and the output shaft 40 may be enriched. According to one embodiment of the present application, as shown in FIG. 1, the force transmission system further includes a third gear shifting device k3, and the third gear shifting device k3 is arranged on the output shaft 40 and selectively enables one of the plurality of output-shaft-second-input-gears to be engaged with the output shaft 40.

The third gear shifting device k3 is used to enable selected different output-shaft-second-input-gears to be engaged with the output shaft 40, so that shifting of different gears of the force transmission system between the intermediate shaft 30 and the output shaft 40 is realized.

According to one embodiment of the present application, as shown in FIGS. 1-6, one or more intermediate shaft(s) 30 are configured, each intermediate shaft 30 is linked with the first transfer mechanism, and each intermediate shaft 30 is provided with a plurality of intermediate-shaft-output-gears.

By providing the plurality of intermediate shafts 30, the load of the intermediate shaft 30 for force transmission is improved, and the application range of the force transmission system is widened. Thus, the force transmission system of the present application may be applied to heavy-duty vehicles.

According to one embodiment of the present application, as shown in FIGS. 1-6, a clutch 4 is disposed between an engine output shaft 70 of the engine 1 and the first input shaft 10, and the clutch 4 selectively enables the engine output shaft 70 to be engaged with the first input shaft 10.

The clutch 4 is adapted to determine whether the engine 1 is connected to the first input shaft 10 through control. In a pure electric state, the engine 1 may be disconnected with the first input shaft 10, the driving force from the first motor generator 2 and/or the driving force from the second motor generator 3 is output merely.

A vehicle according to the present application is briefly described below.

The vehicle according to the present application is provided with the force transmission system according to any one of the abovementioned embodiments. Thus, the vehicle may be a hybrid heavy-duty vehicle, and this vehicle has a plurality of gears so as to be suitable for different loads, thereby effectively reducing fuel consumption. Moreover, when the vehicle is in the gear shifting process, power interruption may be avoided, driving force shifting is smoother, and the comfort and the driving force performance of the vehicle are excellent.

When the vehicle is in a parking charging mode, the electric quantity of the vehicle-mounted driving force battery is low, the first motor generator 2 converts mechanical driving force of the engine 1 into electric energy through electromechanical conversion, thereby charging the vehicle-mounted driving force battery. The second motor generator 3 is in a shutdown state. At this time, the clutch 4 is closed, the first gear shifting device k1, the second gear shifting device k2 and the third gear shifting device k3 are in a neutral gear.

When the vehicle is in a pure electric drive mode, the electric quantity of the vehicle-mounted driving force battery is sufficient, the first motor generator 2 and/or the second motor generator 3 provide pure electric drive for the vehicle, the first motor generator 2 may be driven in six gears or is in the neutral gear, and the second motor generator 3 may be operated and driven in the first gear, the third gear, the fourth gear or the sixth gear, or is in the neutral gear. When the vehicle performs gear shifting, one motor in kept in the current gear, and the other motor may be smoothly shifted to another gear, thereby realizing gear shifting without power interruption. At this time, the clutch 4 is opened, and the first gear shifting device k1, the second gear shifting device k2 and the third gear shifting device k3 provide driving or neutral gear as needed.

When the vehicle is in a series hybrid mode, the electric quantity of the vehicle-mounted driving force battery is insufficient, the first motor generator 2 converts the mechanical driving force of the engine 1 into electric energy so as to charge the vehicle-mounted driving force battery, part of the electric energy may be directly supplied to the second motor generator 3, and the second motor generator 3 independently provides a forward gear or a reverse gear in the first gear or the fourth gear. At this time, the clutch 4 is closed, the first gear shifting device k1 and the second gear shifting device k2 are in neutral gear, the third gear shifting device k3 is engaged with the first-output-shaft-second-input-gear 42a or engaged with the second-output-shaft-second-input-gear 42b. Driving force is transmitted to the second input shaft 20 by the second motor generator 3 and then is conveyed to the first transfer mechanism through the second input shaft 20, the first transfer mechanism transmits the driving force to the intermediate shaft 30, the intermediate shaft 30 transmits the driving force to the first-intermediate-shaft-output-gear 32a or the second-intermediate-shaft-output-gear 32b. After gear shifting is performed by the third gear shifting device k3, the driving force is output through the output shaft 40, the vehicle may be driven forward or backward through the first gear or the four gear of the second motor generator.

Specifically, the second motor generator 3 outputs driving force, the second input shaft 20 is in force transmission connection with the second motor generator 3. The second input shaft 20 is provided with a second input shaft gear 21, the first double-linked input gear 20b is meshed with the second input shaft gear 21, the first double-linked input gear 20b is disposed on the first transfer mechanism (i.e., the first double-linked gear 20a). The first double-linked gear 20a is provided with a first double-linked output gear 20c meshing with the intermediate-shaft-input-gear of the intermediate shaft 30. The intermediate shaft 30 is provided with a first-intermediate-shaft-output-gear 32a and a second-intermediate-shaft-output-gear 32b which are respectively meshing with the first-output-shaft-second-input-gear 42a and the second-output-shaft-second-input-gear 42b disposed on the output shaft 40, thereby outputting the driving force to the output shaft 40, and thereby outputting the driving force to the vehicle so as to drive the vehicle.

As shown in FIG. 1, the force transmission system of the present application applies four different transmission paths to perform gear shifting between six gears without power interruption. In the gear shifting process, the power source for driving the output shaft 40 is also switched between the engine 1, the first motor generator 2 and the second motor generator 3.

When the vehicle is in an engine direct drive mode in the first gear or in a parallel hybrid mode, the clutch 4 is closed, the first gear shifting device k1 enables the first input shaft 10 to be engaged with the first double-linked output gear 20c, the second gear shifting device k2 is in neutral gear, and the third gear shifting device k3 enables the output shaft 40 to be engaged with the second-output-shaft-second-input-gear 42b. The engine 1 or the first motor generator 2 and/or the second motor generator 3 are used as power source, the driving force from the power source is transmitted by the first input shaft 10 and/or the second input shaft 20 to the intermediate shaft 30 through the first double-linked output gear 20c, and the intermediate shaft 30 transmits the driving force to the output shaft 40 through the second-output-shaft-second-input-gear 42b. When the vehicle is in the engine direct drive mode in the second gear or in the parallel hybrid mode, the clutch 4 is closed, the first gear shifting device k1 enables the first input shaft 10 to be engaged with the first-input-shaft-second-output-gear 12, the second gear shifting device k2 is in the neutral gear, and the third gear shifting device k3 enables the output shaft 40 to be engaged with the second-output-shaft-second-input-gear 42b. The engine 1 is independently directly driven in the second gear or is in parallel linkage with the first motor generator 2, and/or the engine 1 and the second motor generator 3 provide a forward gear drive in the first gear in a parallel linkage manner. The driving force from the engine 1 and/or the first motor generator 2 is/are transmitted to the intermediate shaft 30 through the first double-linked output gear 20c of the first input shaft 10, and/or the driving force from the second motor generator 2 is transmitted to the intermediate shaft 30 through the intermediate-shaft-first-input-gear 31, and the intermediate shaft 30 transmits the driving force from the second-output-shaft-second-input-gear 42b to the output shaft 40.

When the vehicle is in the engine direct drive mode in the third gear or in the parallel hybrid mode, the clutch 4 is closed, the second gear shifting device k2 enables the output shaft 40 to be engaged with the output-shaft-first-input-gear 41. Or alternatively, the first gear shifting device k1 is in the neutral gear, the third gear shifting device k3 is in the neutral gear or enables the output shaft 40 to be engaged with the first-output-shaft-second-input-gear 42a or the second-output-shaft-second-input-gear 42b, to enable the second motor generator 3 to be in the neutral gear or in the first gear or in the fourth gear. Or alternatively, the third gear shifting device k3 is in the neutral gear, the first gear shifting device k1 enables the first input shaft 10 to be engaged with the first double-linked output gear 20c, and the second motor generator 3 is also in the third gear. The engine 1 is independently in direct drive in the third gear, or alternatively, the engine 1 and the first motor generator 2 are in parallel linkage manner, and/or the engine 1 and the second motor generator 3 provides a forward gear drive in parallel linkage manner in the first gear, in the third gear, in the fourth gear, or in the neutral gear.

When the vehicle is in engine direct drive mode in the fourth gear or in parallel hybrid mode, the clutch 4 is closed, the first gear shifting device k1 enables the first input shaft 10 to be engaged with the first double-linked output gear 20c, the second gear shifting device k2 is in the neutral gear, and the third gear shifting device K3 enables the output shaft 40 to be engaged with the first-output-shaft-second-input-gear 42a. The engine 1 provides direct drive independently in the fourth gear, or alternatively, the engine 1 and the first motor generator 2 and/or the second motor generator 3 provide a forward gear drive in parallel linkage manner. Driving force from the power source is transmitted by the first input shaft 10 and/or the second input shaft 20 to the intermediate shaft 30 through the first double-linked output gear 20c, and the intermediate shaft 30 transfers the driving force from the first-output-shaft-second-input-gear 42a to the output shaft 40.

When the vehicle is in the engine direct drive mode in the fifth gear or in the parallel hybrid mode, the clutch 4 is closed, the first gear shifting device k1 enables the first input shaft 10 to be engaged with the first-input-shaft-second-output-gear 12, the second gear shifting device k2 is in the neutral gear, and the third gear shifting device k3 enables the output shaft 40 to be engaged with the first-output-shaft-second-input-gear 42a. The engine 1 independently provides direct drive in the fifth gear or the engine 1 is in parallel linkage with the first motor generator 2, and/or the engine 1 and the second motor generator 3 provides forward gear drive in the fourth gear in the parallel linkage manner. The driving force from the engine 1 and/or the first motor generator 2 is transmitted to the intermediate shaft 30 through the first-input-shaft-second-output-gear 12 of the first input shaft 10, and/or the driving force from the second motor generator 2 is transmitted to the intermediate shaft 30 from the intermediate-shaft-first-input-gear 31. The intermediate shaft 30 transmits the driving force from the first-output-shaft-second-input-gear 42a to the output shaft 40.

When the vehicle is in the engine direct drive mode in the sixth gear or is in parallel hybrid mode, the clutch 4 is closed, the first gear shifting device k1 enables the first input shaft 10 to be engaged with the first double-linked output gear 20c, the second gear shifting device k2 enables the output shaft 40 to be engaged with the first-input-shaft-first-output-gear 11, and the third gear shifting device k3 is in the neutral gear. Alternatively, the clutch 4 is closed, the first gear shifting device k1 is in the neutral gear, the second gear shifting device k2 enables the output shaft 40 to be engaged with the first-input-shaft-first-output-gear 11, the third gear shifting device k3 is in the neutral gear or enables the output shaft 40 to be engaged with the first-output-shaft-second-input-gear 42a. The engine 1 independently provides direct drive in the sixth gear or is in parallel linkage with the first motor generator 2, or alternatively, the engine 1 and the second motor generator 3 provides a forward gear drive in the fourth gear, or in the sixth gear, or in the neutral gear in the parallel linkage manner. The driving force from the engine 1 and/or the first motor generator 2 is directly transmitted to the output shaft 40 through the first input shaft 10. Furthermore, when the vehicle is continuously in an engine high-speed cruise direct drive mode in the sixth gear, the first gear shifting device k1 and the third gear shifting device k3 may be in the neutral gear, the second motor generator 3 may be shut down completely, and the relevant shaft gear transmission mechanisms connected with the second motor generator 3 includes the second input shaft 20, the second input shaft gear 21, the first-input-shaft-second-output-gear 12, the first double-linked input gear 20b, the first double-linked output gear 20c, the intermediate shaft 30, the intermediate-shaft-first-input-gear 31, the first-intermediate-shaft-output-gear 32a, the second-intermediate-shaft-output-gear 32b, the intermediate-shaft-second-input-gear 33, the first-output-shaft-second-input-gear 42a and the second-output-shaft-second-input-gear 42b. These shaft gear transmission mechanisms are all in completely stationary and non-rotating state, thereby greatly reducing fuel consumption of the force transmission system during high-speed driving and improving a fuel economy of the vehicle.

According to the embodiments of the present application, as shown in FIGS. 1-6, the first motor generator 2 and the second motor generator 3 are offset from the engine input shaft 70. Thus, torque requirements of the first motor generator 2 and the second motor generator 3 may be reduced, the arrangement of oil seal of the first motor generator 2 and the second motor generator 3 is simplified, thus, the arrangements of the oil seals of the first motor generator 2, the second motor generator 3 and the engine 1 are simplified, a lubrication sealing effect is better. The engine 1 and the first input shaft 10 may be coaxially arranged, and the first motor generator 2 may be linked with the first input shaft 10 through a first-stage reduction gear.

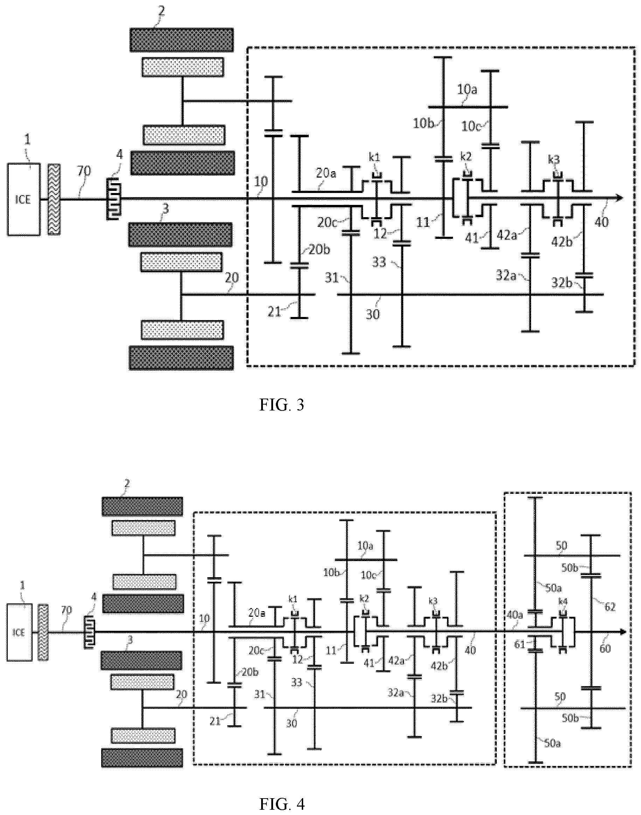

According to one embodiment of the present application, as shown in FIG. 3, the structure of the intermediate shaft 30 may be used, the second transfer shaft 10a of the second transfer mechanism is arranged to be in parallel with and offset from the intermediate shaft 30 in a circumferential direction of the first input shaft 10 and the output shaft 40, the second transfer input gear 10b and the second transfer output gear 10c are fixedly arranged on the second transfer shaft 10a, and are respectively engaged with the first-input-shaft-first-output-gear 11 and the output-shaft-first-input-gear 41, the first input shaft 10 is linked with the second transfer mechanism. The second transfer mechanism is arranged to be independent of the intermediate shaft 30 and the second transfer mechanism and the intermediate shaft 30 do not interfere with each other. Thus, the production and manufacturing process of the shaft gear mechanism of the transmission system may be simplified, which is beneficial to reduction of the system. The force transmission system with one single intermediate shaft structure has a simplified structure and a weaker bearing capacity than the transmission system having multiple intermediate shafts, and thus is applicable to a light vehicle with small traction requirement.

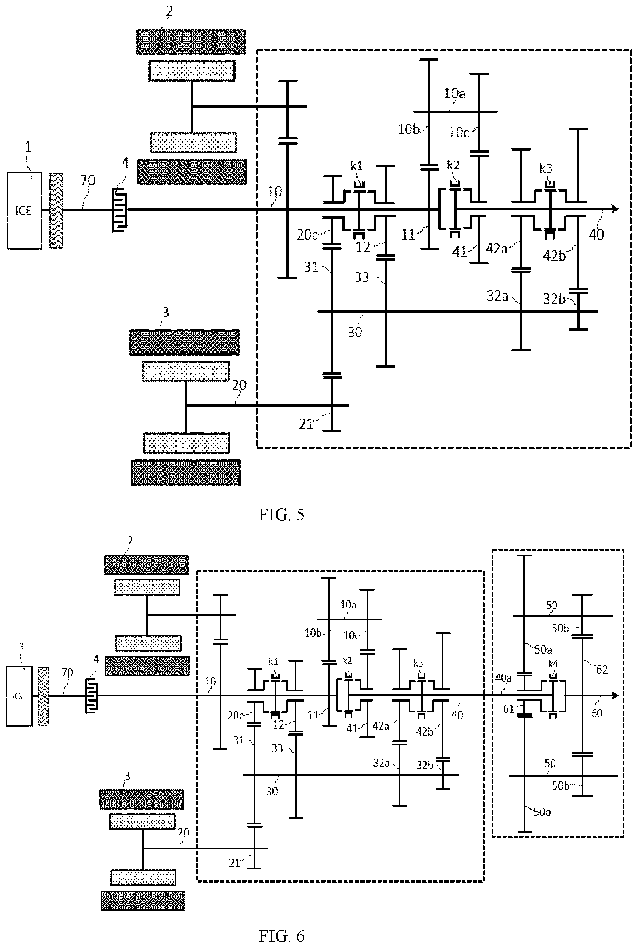

According to one embodiment of the present application, as shown in FIG. 5, on the basis of the embodiment of the force transmission system based on the one single intermediate shaft structure in FIG. 3, the second input shaft gear 21 connected to the second motor generator 3 is directly engaged with the intermediate-shaft-first-input-gear 31, the assembly of the first double-linked input gear 20b is abandoned. Thus, the transmission path of the second motor generator 3 is further simplified and the cost performance of the force transmission system is improved.

According to three embodiments of the present application, the force transmission system further includes a sub-transmission. As shown in FIGS. 2, 4 and 6, on the basis of the force transmission system based on the structure of FIGS. 1, 3 and 5, the output shaft 40 is linked with the sub-transmission. The sub-transmission has a third input shaft 40a, a sub-transmission output shaft 60, a sub-transmission intermediate shaft 50. The third input shaft 40a is connected with the output shaft 40. The third input shaft 40a is provided with a third-input-shaft-output-gear 61, the sub-transmission intermediate shaft 50 is provided with a sub-transmission-intermediate-shaft-input-gear 50a, the sub-transmission-intermediate-shaft-input-gear 50a is meshed with the third-input-shaft-output-gear 61. The sub-transmission intermediate shaft 50 is provided with a sub-transmission-intermediate-shaft-output-gear 50b, the sub-transmission output shaft 60 is sleeved with a sub-transmission-output-shaft-input-gear 62 engaged with the sub-transmission-intermediate-shaft-output-gear 50b. A sub-transmission gear shifting mechanism k4 is arranged in the sub-transmission, the sub-transmission gear shifting mechanism k4 selectively enables the third input shaft 40a to be engaged with the sub-transmission output shaft 60 or enables the sub-transmission output shaft 60 to be engaged with the sub-transmission-output-shaft-input-gear 62. According to the arrangement of the sub-transmission, the number of gears of the main transmission may be increased by two times, the gears of the force transmission system is further increased, such that the force transmission system can be applicable to heavy-duty vehicles and super heavy vehicles.

In the description of the present application, the descriptions of the reference terms such as "one embodiment", "some embodiments", "exemplary embodiments", "example", "specific example" or "some examples" and the like means that the specific technical features, structures, materials or characteristics which are described with reference to the embodiments or the examples are included in at least one embodiment or example of the present application. In the description of the present application, a schematic expressions of the terms mentioned above don't necessarily refer to the same embodiment or example. Furthermore, the specific technical features, structures, materials, or characteristics described above may be combined in any suitable manner in any of one or a plurality of embodiments or examples.

Although the embodiments of the present application have been illustrated and described, a person of ordinary skill in the art may understand that these embodiments can be changed, revised, replaced and modified without departing from the principle and the intention of the present application. The scope of the present application is limited by the claims and their equivalents.

## Claims

1. A force transmission system, **characterized in that**, the force transmission system comprises:
an engine, a first motor generator and a second motor generator;
a first input shaft being in force transmission connection with the engine and the first motor generator;
a second input shaft being in force transmission connection with the second motor generator;
a first transfer mechanism being selectively engaged with the first input shaft and being linked with the second input shaft;
a second transfer mechanism being linked with the first input shaft;
an intermediate shaft being linked with the first transfer mechanism and being selectively linked with the first input shaft;
an output shaft being selectively linked with the intermediate shaft and/or the second transfer mechanism and/or the first input shaft, respectively; wherein the first input shaft and the output shaft are coaxially arranged, the second transfer mechanism and the intermediate shaft are arranged to be spaced from each other in a circumferential direction of the first input shaft.

2. The force transmission system according to claim 1, wherein the first transfer mechanism is configured as a first double-linked gear sleeved on a periphery of the first input shaft; wherein the second input shaft is provided with a second input shaft gear, and the first double-linked gear is provided with a first double-linked input gear meshing with the second input shaft gear;
the intermediate shaft is provided with an intermediate-shaft-first-input-gear, and the first double-linked gear is provided with a first double-linked output gear meshing with the intermediate-shaft-first-input-gear.

3. The force transmission system according to claim 2, wherein the second transfer mechanism is configured as one or a plurality of second transfer shaft(s), each of the second transfer shafts is provided with a second transfer input gear and a second transfer output gear, wherein the second transfer shaft is arranged to be in parallel with and offset from the intermediate shaft in a circumferential direction of the first input shaft, and the first input shaft is provided with a first-input-shaft-first-output-gear meshing with the second transfer input gear;
the output shaft is provided with an output-shaft-first-input-gear selectively linked with the output shaft, and the output-shaft-first-input-gear is meshed with the second transfer output gear.

4. The force transmission system according to claim 3, wherein the first input shaft is sleeved with a first-input-shaft-second-output-gear, the intermediate shaft is provided with an intermediate-shaft-second-input-gear meshing with the first-input-shaft-second-output-gear.

5. The force transmission system according to claim 4, wherein the force transmission system further comprises:
a first gear shifting device which is disposed on the first input shaft and selectively enables the first input shaft to be engaged with the first double-linked gear or the first-input-shaft-second-output-gear.

6. The force transmission system according to claim 3, wherein the output shaft is provided with a second gear shifting device, the second gear shifting device selectively enables the output shaft to be engaged with the first input shaft or enables an output-shaft-first-input-gear to be engaged with the output shaft.

7. The force transmission system according to claim 1, wherein the intermediate shaft is provided with a plurality of intermediate-shaft-output-gears, the output shaft is sleeved with a plurality of output-shaft-second-input-gears meshing with the plurality of intermediate-shaft-output-gears respectively, and the output shaft is selectively engaged with one of the plurality of output-shaft-second-input-gears.

8. The force transmission system according to claim 7, wherein the force transmission system further comprises:
a third gear shifting device which is disposed on the output shaft and selectively enable one of the plurality of output-shaft-second-input-gears to be engaged with the output shaft.

9. The force transmission system according to claim 7, wherein one or a plurality of intermediate shafts is/are configured, each of the intermediate shafts is linked with the first transfer mechanism, and each of the intermediate shafts is provided with a plurality of the intermediate-shaft-output-gears.

10. The force transmission system according to claim 1, wherein a clutch is arranged between an engine output shaft of the engine and the first input shaft, and the clutch is configured to selectively enable the engine output shaft to be engaged with the first input shaft.

11. A vehicle, **characterized in that**, the vehicle comprises the force transmission system according to any one of claims 1-10.
